# EUROPEAN PATENT SPECIFICATION

(11) **EP 0 600 080 B1**
(45) Date of publication and mention of the grant of the patent: **09.09.1998**
(21) Application number: 93916725.0
(22) Date of filing: 23.06.1993
(51) Int. Cl.: A01N 25/10

(54) **ORGANIC PESTICIDE**
ORGANISCHE PESTIZIDE
PESTICIDE ORGANIQUE

(30) Priority: 24.06.1992 US 903501
(43) Date of publication of application: 08.06.1994
(73) Proprietor: Hot Pepper Wax Inc., Greenville, Pa 16125 (US)
(72) Inventor: Wilson, Walter R., Pulaski, Pennsylvania16143 (US)
(74) Representative: Morton, Colin David
(86) International application number: PCT/US93/06026
(87) International publication number: WO 94/00010

(56) References cited:
- EP-A- 0 360 883
- WO-A-90/14012
- FR-A- 1 569 147
- GB-A- 2 058 819
- US-A- 4 230 687
- US-A- 4 230 694
- US-A- 4 518 593
- US-A- 4 557 934
- US-A- 4 587 123
- US-A- 4 963 591
- CHEMICAL ABSTRACTS, vol. 113, no. 21, 19 November 1990, Columbus, Ohio, US; abstract no. 186603, & JP-A-02 160 848 (NIPPON UNICAR) 20 June 1990

## Description

### Technical Field

This invention relates to a totally organic pesticide which effects its function by physically changing the environment of the organism, thereby mechanically disrupting its ability to function.

### Background of the Invention

There are several ways to protect useful and ornamental plants against pests, disease and weeds. The simplest, yet most ineffective way is purely mechanical removal of weeds and pests. The most common method is the use of chemical control agents, because of their ease of application. However, the use of chemical agents often invokes the disadvantage of unwanted side effects which may be attributed, for example, to high toxicity or inadequate degradability, and in the case of pests, the development of resistance, often after only a short period of time.

In particular, pests such as the spider mite are particularly troublesome. Spider mites belong to the family of Acari known scientifically as Tetranychidae, and are a common form of agricultural pest which damage the foliage of plants. Two common species of spider mites are the carmine (red) spider mite (Tetranychus cinnabarinus) and the two-spotted spider mite (Tetranychus urticae), both of which can inflict damage and reduce yields of growing crops and plants.

Various miticides are presently available to combat infestations of spider mites by killing such pests. One popular miticide is dicofol, commercially available from Rohm & Hass Company of Philadelphia, Pa. under the tradename "KELTHANE". 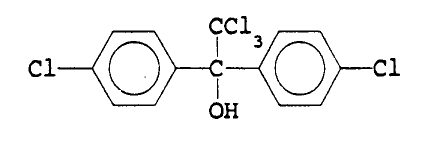 Another popular miticide is a micronized form of sulfur, commercially available from Cumberland International of Houston, Texas, under the tradename "SULFLOX". A third type of popular miticide is 2-(p-tert-butylphenoxy) cyclohexyl-2-propynyl sulfite, commercially available from Uniroyal Chemical, a division of Uniroyal, Inc. under the tradename "COMITE".

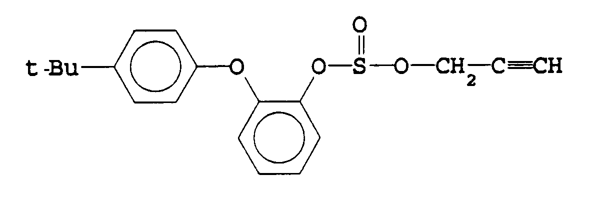

Still another commercially available miticide is sold under the tradename AVID, a spiro[11,15-methano-2H,13H,17H-furo[4,3,2-pq] [2,6] benzodioxacyclooctadecin-13,2'-[2H]pyran], avermectin B1 derivative, available from Merck & Co., Inc. of Rahway, New Jersey. Yet another miticide is sold under the tradename TALSTAR, a cyclopropanecarboxylic acid, 3-(2-chloro-3,3,3-trifluoro-1-propenyl)-2,2-dimethyl-,(2-methyl[1,1 '-biphenyl]-3-yl)methyl ester, [1.alpha.,3.alpha.(Z)]-(.+-.)-, available from FMC, Philadelphia, Pennsylvania. 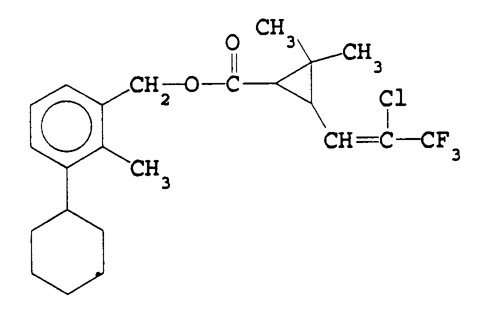 Yet another product is bi-2,4-cyclopentadien-1-yl,1,1',2,2',3,3',4,4',5,5'-decachloro- or bis(pentachloro-2,4-cyclopentadien-1-yl), sold under the tradename PENTAC AQUAFLOW, available from Sandoz, Ltd., Basel Switzerland.

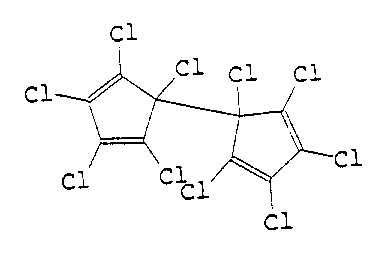

And still another product is sold under the trade name SAFER soap, commercially available from Safer Inc., Newton, Massachusetts.

While such miticides are generally effective against spider mites in the short term, spider mites reproduce rapidly, and resistant strains develop an increased tolerance of such miticides over a period of time. It is also believed that spider mites must actually come in physical contact with such miticides in order to be killed thereby. However, as compared with other agricultural pests, spider mites move relatively little, and are therefore less likely to come into physical contact with applied miticides unless relatively large amounts of such miticides are applied.

However, with all of the typical pest control methods currently in use, there is no product currently available which is environmentally safe, to which insects do not quickly develop a resistance to.

Known from WO-A-9014012 is a pesticide comprising a pepper powder, sulphur powder and crushed or pulped garlic bulbs.

Known from US-A-4230694 is a paraffin wax emulsion for application to plants for disease protection purposes, and a generally similar composition which may also contain an insecticide is known from FR-A-1569147. Advantages of the use of paraffin wax as a miticide are known from GB-A-2059918.

### Summary of the Invention

According to one aspect of the present invention, there is provided a topically applied non-penetrating pesticide containing only natural ingredients with no phytotoxicity to a host plant, comprising an irritant in the form of a hot pepper extract of capsaicins, C. frutescens or C. annum together with a scent package including at least one scent of a tincture of garlic, onion, parsley, basil, thyme, coriander, cumin, mustard, rosemary, orange and/or lemon, characterised in that the irritant strained of extraneous vegetable matter and in an amount of from 10 to 33% by total weight, is dispersed in an aliphatic hydrocarbon microcrystalline waxy base, from 9 to 40% by total weight, impregnated with a sufficient quantity of water such that as the water evaporates, the base will contract, and in that the scent package in an amount from 1 to 2% by total weight and having an alcohol soluble oil phase and a water soluble component, is added to the dispersion, whereby in use interaction of an alcoholic part of the tincture facilitates the migration of the scent to an exterior surface of the wax.

Thus, in use, the scent, which has a lower vapor pressure than the alcohol, is transported through the waxy matrix through its solubilization in the alcohol of higher vapour pressure, thereby permitting additional scent to reach the exterior surface than would otherwise be possible if the scent was used alone, the waxy base, irritant, and scent combination being capable of being washed from the plant or fruit without any deleterious effect on the plant.

According to another aspect of the invention there is provided a method of preparing the above-defined pesticide which comprises the steps of:
(i) suspending the microcrystalline waxy base in a spinning vortex that produces a venturi of water using a centrifugal velocity mixing technique;
(ii) adding the irritant to the waxy base, the irritant having been previously extracted by combining with at least one extracting agent, heating the combination for at least 24 hours, and straining to produce the irritant essentially free of extraneous vegetable matter;
(iii) adding the water-soluble scent to the waxy base, the scent having been previously extracted by combining with at least one extracting agent, heating the combination for at least 24 hours, and straining to produce the water soluble component of the scent essentially free of extraneous vegetable matter;
(iv) adding the alcohol soluble oil phase of the scent, the extraneous vegetable matter of the previous step having previously been diluted with alcohol to obtain the alcohol soluble oil component, the addition of the irritant and the scent extract occurring in the centrifugal mixer to produce a rotating suspension of the pesticide, the speed of the rotating suspension ensuring mechanical attachment of the irritant and the scent to the waxy base; and
(v) straining the pesticide under pressure.

### Detailed Description of the Drawings

The invention may take physical form in certain parts and arrangements of parts, a preferred embodiment of which will be described in detail in the specification and illustrated in the accompanying drawings which form a part thereof, and wherein:

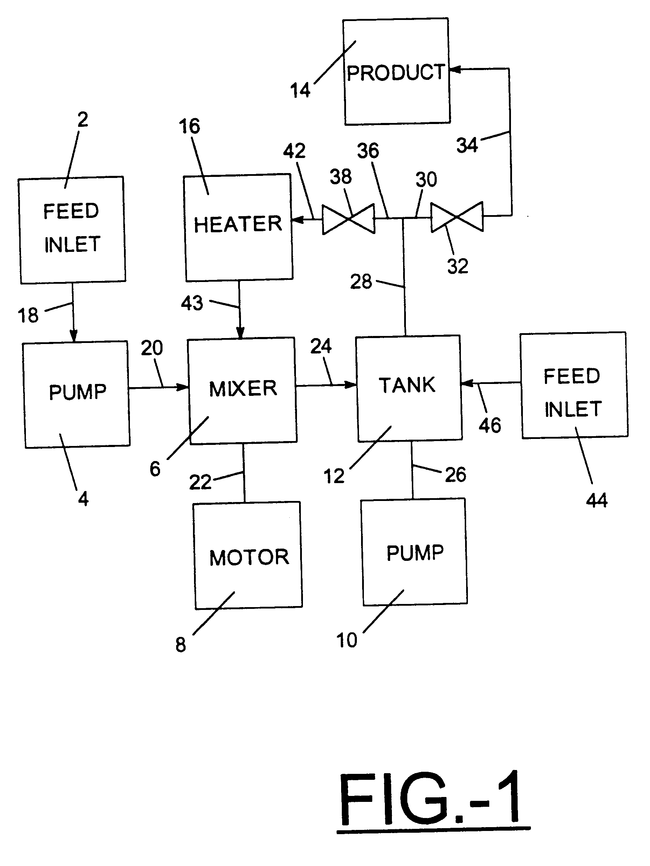

Figure 1 is a flow diagram of the process used in the preparation of the pesticide.

### Detailed Description of the Invention

The organic pesticide termed "Hot Pepper Wax" of this invention is a multicomponent mixture of ingredients, each with a specified purpose. In general, the product uses a refined wax base. Refined wax is made by the elongation of long chain hydrocarbon wax molecules with water. Refined wax is inert, and Federal Drug Administration (FDA) approved for use on all edibles.

While the exact nature of the initial wax is not critical, in general, it will be a low-melting compound of high molecular weight, solid at room temperature. Common properties which must be exhibited by the wax is water repellency, smooth texture, nontoxicity, and freedom from objectionable odor and color. Specifically, the wax can be described as an aliphatic hydrocarbon, characterized by a straight or branched carbon chain. In generic formula, it is characterized as C₂H₂ₙ₊₂.

As the refined wax dries, the water component evaporates causing the long chain molecules to shorten. Refined wax is white when applied, but as it dries, becomes clear. Although wax and water do not mix, they can be held together, thereby leading to the white appearance. A waxy coating however, by itself, is only partially effective in killing insects, particularly mites. While not wishing to be bound by theory, the natural property of refining wax to contract upon moisture content evaporation, is speculated to effect a mechanical killing of the mites through suffocation.

One additional benefit of employing a waxy base to the plant foliage is the anti-transpirant properties associated with the application. Natural evaporation is slowed through the waxy layer thereby promoting water conservation in more arid climates.

Supplementing this naturally protective waxy coating is the incorporation of capsaicin extract of Cayenne pepper. The extract has at least two intriguing qualities. First it is harmless to plants, and secondly, it is the active principal that makes Cayenne pepper hot. Capsaicin is a powerful central nervous system (CNS) stimulant It is unique in that it produces heat and is measured in Heat Units (HU). In producing Capsaicin extract, the interest is primarily in the percent of Capsaicin to extraneous matter. This percent can be dramatically increased by polyploidy of Capsicum frutescens. Polyploidy is the condition of multiple sets of chromosomes, it creates sports or plants of increased yield or potency. It is an arduous process in that it requires interfering with the separation of mother/daughter cells at the time mitosis or cell-splitting occurs.

By applying capsaicin extract and refined wax in an aqueous suspension, an effective miticide can be produced and applied to plants. However, the lasting effect of the capsaicin extract and refined wax is quite limited, and requires a dally application to insure effectiveness.

However, through the addition of additional scents to the pesticide formulation, an increase in effectiveness can be achieved with a decrease in application rate. This scent module is created from plant extracts of plants that naturally repel insects. A tincture (alcohol extract) was prepared of mustard (an irritant of Brassica nigra), rosemary (an antioxidant with similar preservative properties to BHA (butylated hydroxyanisole) and BHT (butylated hydroxytoluene), and bioflavonoids (natural insect repellents) from orange and lemon. Additionally, it has been found effective to add tinctures of garlic, onion, parsley, basil, thyme, coriander, and cumin to the scent package. Each of these extracts are taken from the raw fruit or herb, and in some cases, are milled into the wax. This scent package is added to the refined waxy base in a titrated form as only minute doses are needed. The ability of an insect to detect smells is far greater than that of other organisms.

Since the pesticide is not absorbed into the plant or fruit, it does not impart a flavor to treated fruit. The higher rotating form of the capsaicin migrates to the surface of the wax as a fine oil. This happens as a result of the shortening of the long chain molecules of the wax as a direct result of the dehydration process, i.e, a divisional separation or zoning occurs, much like chromatography. The pesticide may be easily removed from the fruit with warm water, as the wax softens and carries the constituents away with the water. Dispersement of the oils will occur naturally, within two weeks as the oils are volatile. Dispersement is logarithmic, with a mean half life of seven days. Following seven days, the oils disperse much quicker, with 80% of the oils gone in ten days.

The synergy between the naturally contracting waxy base containing capsaicin coupled with the higher vapor pressure (volatility) of the scents, leads to a natural migration of the of the scent package to the surface of the waxy base. Waxy-based pesticide material with capsaicin required a daily application to retain its pesticidal qualities. With the incorporation of the scent package, effectiveness was maintained for a longer period of time with a decreased frequency of application. The surface migration of the additive scents is speculated to effect this desirable result.

Plants that have been attacked by insects are susceptible to various fungi, bacteria and viral infections. This infection could be carried on the bugs, or is a result of the insects. In fact, in some cases, it is the fungus, or mosaic, that kills the plant, not the insects. Commercial preparations sometimes contain chemical fungicides and bactericides in prophylactic doses to prevent, not necessarily stop infection. Wetting any diseased plant invites infection and while incorporation of these types of supplements are considered safe by law, they are not desirable in a totally natural pesticide.

Eucalypts are particularly disease free. In fact, eucalyptus oil has been used for hundred of years as an active germicide, possessing antiseptic and astringent qualities. It is probably best known for its use in vaporizers to help relieve respiratory ailments. Eucalyptus is classified by the FDA as non-toxic. Therefore, the incorporation of extract of eucalyptus globulus into the pesticide imparted anti-bacterial, anti-fungicidal efficacy to the pesticide in a natural way.

Optionally, since the pesticide contains an aqueous environment, in a preferred embodiment, the pesticide will include a water soluble nutrient package. Such nutrient package will typically include kelp (seaweed) with appropriate amounts of vitamins and minerals which act as a fertilizer. In a most preferred embodiment, this fertilizer package will be time-released into the soil by the application of additional moisture to the plant foliage coated with the pesticide/nutrient package. The naturally solubility of the nitrogen, phosphorus, and potassium components in the nutrient package will supplement the soil composition as droplets of moisture collect on the leaves and subsequently drop to the ground.

### Examples

In general, the pesticide can be characterised as described in Table 1.

**Table 1**

| | |
|---|---|
| Nitrogen (N) | 1% |
| Phosphoric Acid (P₂O₅) | 0% |
| Potash (K₂O) | 1% |
| Paraffin Wax | 40% |
| Extract of Hot Pepper | 10% |
| Extract of Scent Pkg⁽¹⁾ | 1% |
| Extract of Eucalyptus | 1% |
| Water | 46% |

| | |
|---|---|
| (1) Scent package includes tincture of garlic, onion, parsley, basil, thyme, coriander, cumin, mustard, rosemary, orange and lemon. | |

Alternatively, the pesticide can be formulated as:

**Table II**

| | |
|---|---|
| Capsicum extract^{(a)} | 33% |
| Scent extract^{(b)} | 2% |
| Water | 54% |
| Paraffin wax | 9% |
| Mineral Oil | 2% |

| | |
|---|---|
| (a) Capsicum extract contains (1) select capsicums of C. annuum & C. frutescens | |
| (b) Scent extract contains (1) extractives and tinctures of select fruits, flowers, leaves & roots of mustard, rosemary, orange, lemon, garlic, onion, parsley, basil, thyme, coriander & cumin (2) eucalyptus oil U.S.P. (3) kelp | |

The extractives contain distilled grain vinegar and sodium chloride, while the tinctures contained distilled grain alcohol.

### Preparation

The key to the preparation of the pesticide is the ability to reduce the particle size of the waxy base until the basic wax structure is microcrystalline. To a spinning vortex of water, the microcrystalline wax is combined to produce a milky white liquid. Critical to the preparation is the centrifugal velocity of the suspended particles in the liquid. After sufficient mixing has occurred, capsaicin is added to the suspended mixture followed by the addition of appropriate additives. The speed of the rotating suspension insures a good mechanical attachment of the ingredients to the waxy base.

### Capsicum Extract

During the preparation of capsicum extract, select capsicums of C. annuum and C. frutescens are dried, ground, dehydrated, and milled into a fine powder. This powder is combined with distilled grain vinegar and sodium chloride (NaCl) and blended at high speed for several minutes. The resulting vegetative matter and solution are cooked for at least 24 hours at low temperature in a ceramic crock. The cooked solution is blended at high speed and diluted with distilled grain vinegar to a uniform strength. The solution of uniform strength is then passed through a sieve under pressure to produce an end product free of extraneous vegetative matter.

### Scent Extract

In preparing the scent extract, select fruits, flowers, leaves and roots of mustard, rosemary, orange, lemon, garlic, onion, parsley, basil, thyme, coriander and cumin are dried, ground, dehydrated, and milled into a fine powder. This powder is combined with kelp meal, distilled grain vinegar and sodium chloride (NaCl). This mixture is blended at high speed for several minutes. The resulting vegetative matter and solution are cooked for at least 24 hours at low temperature in a ceramic crock. The cooked solution is blended at high speed. The resulting solution is separated from the vegetative matter by fine filtering. This solution is subsequently concentrated by evaporation to a uniform strength.

The vegetative matter from the water stage of the scent extract is dried, saturated with distilled grain alcohol, and expressed several times to yield a light yellow oil. This oil is filtered and diluted with distilled grain alcohol to produce a scent oil of uniform strength. The scent oil is combined with Eucalyptus oil U.S.P. and passed through a column of activated charcoal. The resulting combination oil is the oil phase of the scent extract.

### Reactor

With reference to Figure 1, sufficient water is added into feed inlet 44 such that upon entry into tank inlet tube 46, there will be an adequate amount of water in tank 12 such that when rotary pump 10 which is in communication with tank 12 through connecting means 26, proper circulation will be effected throughout the system. Water under force is sent through tank outlet 28, which pathway bifurcates into recirculating pathway 36 or product outlet 30. A pair of ball valves 32, 38 control the direction of the path. During product preparation, ball valve 32 is in a closed position, while ball valve 38 is in an open position thereby permitting flow through heater inlet 42 into heater 16, which initially, is not turned on. The water continues through heater outlet 43 into the mixing cavity 6 and converted into a vortex that produces a venturi when the high speed motor 8 which is in communication with mixer 61 via connector 22 is turned on. The path is completed by the venturi created by mixer 6 moving through mixer outlet 24 into tank 12.

The microcrystalline findings of the refined Paraffin wax U.S.P. is added to tank 12 and, after sufficient mixing, capsicum extract is added via feed inlet 44 through tank inlet tube 46 into tank 12 in the proper proportion. After sufficient mixing, the water phase of the scent extract is added in a similar manner. The temperature is raised in the mixer 6 by heater 16 until the findings adhere themselves to the capsicum-scent liquid.

The oil phase of the scent extract is combined with mineral oil in feed inlet 2 to form an emulsifier that is injected under high pressure from feed inlet 2 through pump inlet 18 and high pressure pump 4 into the stream of the vortex and into the venturi by mixer inlet 20. The resulting liquid is a stable pink suspension with the strong smell of capsicum. The end liquid is collected by closing ball valve 38 and opening ball valve 32, which permits collection of the product via collection tube 34 into product collector 14. After straining under pressure, the product is stored for later use.

### Application

Through its effect on the central nervous system of the insect, minutes after the first application, targeted insect movements will increase, causing them to run through the wax. This increased activity stimulated by the capsaicin extract, effectively increases the dosage of capsaicin absorbed by the insects. Within about two hours, insect movement is noticeably slowed, due to the wax drying, and the insects begin to turn brown. Eggs touched by the product brown and appear to die. Larvae and nymphs are particularly affected, some dying on contact.

Multiple applications of the pesticide increase the efficacy of the product. When additional applications are applied 24 hours subsequent to the first application, insects that had avoided the first spray by hiding under the leaves were now quite confused in that their food source is inedible. As the insects stay away from the exposed leaves, for maximal effectiveness, the second application should be applied to the underneath of the leaves. Within one week, the insects were considered controlled, and within three weeks, remained completely eradicated. In the case of mites, three weeks is the critical time frame to pass because of successive Instars (new generations) from eggs that were not contacted. Instars that may survive are faced with a particular problem in that they are unable to consume their food supply. Residual capsaicin is most active in the first week of application, but activity is still measurable in two-three weeks.

This residual activity was confirmed by placing insects on leaves coated with the pesticide, which caused them to get the "hot foot", and make every aflempt to leave the leaf.

The pesticide has a broad range of effective applications and is successful in killing aphids, spider mites, thrips, leaf minters, white flies, lace bugs, leaf hoppers and scale. Additionally, the pesticide has been found effective against slugs, snails, and cutworms.

A series of comparative tests were performed with the pesticide and several well-known commercial products. The tests were conducted on potted miniature roses and used the two-spotted spider mite.

### Mite Counting Procedure:

The following procedure was followed in deriving the numbers listed in Table III. Two leaves of each plant are selected at random. Each leaf is brushed and the mites are collected on a slide covered with Gum Arabic. Each slide is fixed, stained, dried and covered with a cover slip. The slide is positioned under a microscope and the number of mites is counted by eye and their numbers recorded with a mechanical clicker. The average number of mites per slide is multiplied by the number of leaves per plant.

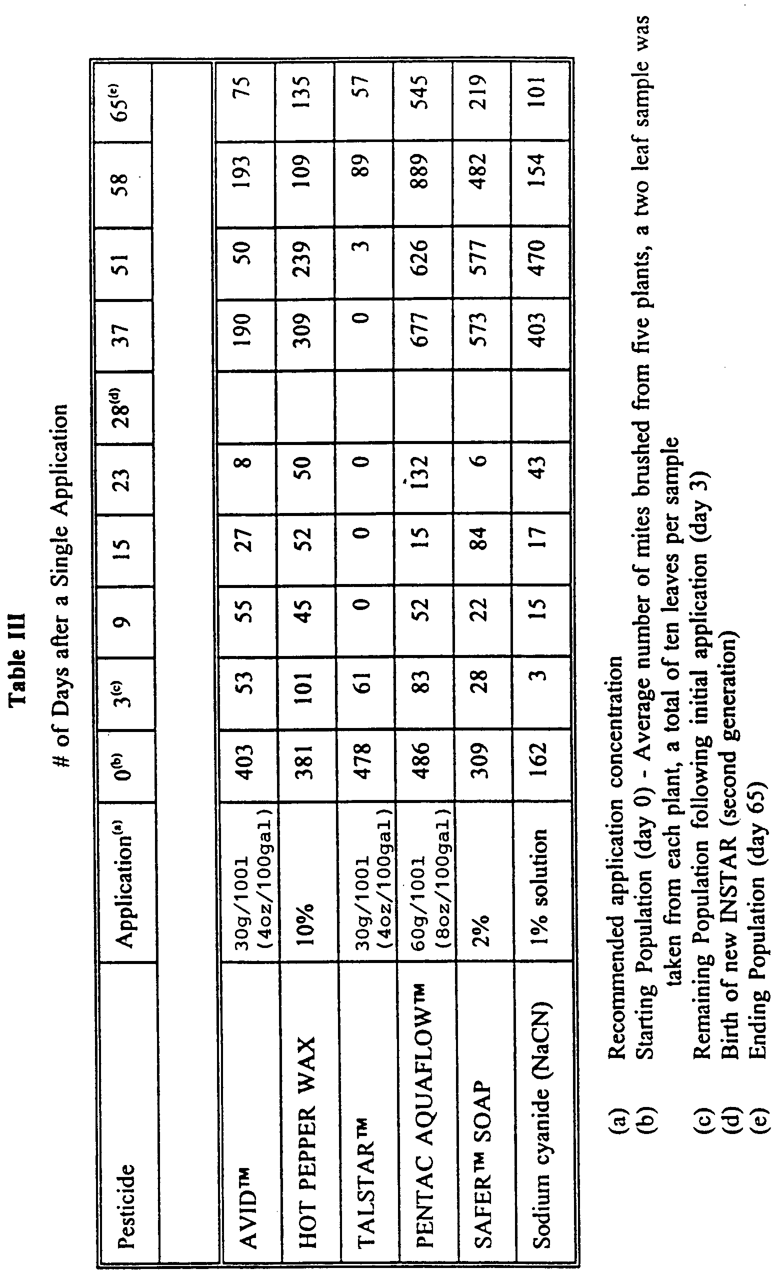

**Table IV**

| Product Effectiveness and Phytotoxicity | | | | |
|---|---|---|---|---|
| Pesticide | Effectiveness^{(a)} | Initial kill (3 days)^{(b)} | Phytotoxicity^{(c)} | Applicability^{(d)} |
| TALSTAR™ | 88% | 87% | moderate | Ornamental plants |
| AVID™ | 81% | 87% | moderate | Ornamental plants |
| HOT PEPPER WAX | 65% | 73% | none | Food^{(e)}/Ornamentals |
| Sodium Cyanide (NaCN) | 37% | 98% | severe | Ornamental plants |
| Safer™ Soap | 29% | 91% | moderate | Food/Ornamentals |
| PENTAC AQUAFLOW™ | -12% | 83% | mild | Ornamental plants |

| | | | | |
|---|---|---|---|---|
| (a) Effectiveness at eradicating mite population, 65 days following a single application | | | | |
| (b) Initial kill of mite population measured at 3 days after initial application | | | | |
| (c) Phytotoxicity to subject plant none - no effect mild - minor burning and/or wilting moderate - major burning and/or wilting, leaf drop and/or distortions severe - plant loss or death | | | | |
| (d) approved for use on ornamental plants and/or food crops | | | | |
| (e) pending approval with FDA | | | | |

As is clearly seen in Table IV, the organic pesticide of the invention, HOT PEPPER WAX™ is an effective eradicant against the two-spotted spider mite with no phytotoxicity to the host plant. While there are other products which are more effective in this process, none of these products are totally organic and derived from plant sources. The unanticipated synergistic interaction between the scent extract, the capsicum extract, coupled together in the paraffin wax, provides an environmentally safe pesticide to which insects do not develop an increased tolerance. The synergy between the naturally contracting waxy base, due to slow dehydration, which contains the capsaicin, coupled with the higher vapor pressure (volatility) of the scents, leads to a natural migration of the scent package to the surface, thereby enhancing the effectiveness of the product The ability to incorporate a water soluble nutrient package into the pesticide, typically kelp (seaweed) with appropriate amounts of vitamins and minerals promotes the usefulness of the product.

## Claims

1. A topically applied non-penetrating pesticide containing only natural ingredients with no phytotoxicity to a host plant, comprising an irritant in the form of a hot pepper extract of capsicums, C. frutescens or C. annum together with a scent package including at least one scent of a tincture of garlic, onion, parsley, basil, thyme, coriander, cumin, mustard, rosemary, orange and/or lemon, characterised in that the irritant, strained of extraneous vegetable matter and in an amount of from 10 to 33% by total weight, is dispersed in an aliphatic hydrocarbon microcrystalline waxy base, from 9 to 40% by total weight, impregnated with a sufficient quantity of water such that as the water evaporates, the base will contract, and in that the scent package, in an amount from 1 to 2% by total weight and having an alcohol soluble oil phase and a water soluble component, is added to the dispersion, whereby in use interaction of an alcoholic part of the tincture facilitates the migration of the scent to an exterior surface of the wax.

2. The pesticide of claim 1 which further comprises a soluble fertilizer.

3. The pesticide of claim 2 wherein the soluble fertilizer comprises kelp, vitamins and minerals.

4. The pesticide of any of claims 1 to 3 which further comprises a germicide.

5. The pesticide of claim 4 wherein the germicide is an extract of eucalyptus.

6. The pesticide of any of claims 1 to 5 wherein the pesticide is an aqueous suspension.

7. A method of preparing the pesticide of claim 1, comprising the steps of:
(i) suspending the microcrystalline waxy base in a spinning vortex that produces a venturi of water using a centrifugal velocity mixing technique;
(ii) adding the irritant, obtainable by combining capsicums of C. annum or C. frutescens with distilled grain vinegar and NaCl, heating the combination for at least 24 hours, and straining to produce the irritant essentially free of extraneous vegetable matter, to the waxy base;
(iii) adding the water-soluble scent to the waxy base, the scent having been previously extracted by combining with at least one extracting agent, heating the combination for at least 24 hours, and straining to produce the water soluble component of the scent essentially free of extraneous vegetable matter;
(iv) adding the alcohol soluble oil phase of the scent, the extraneous vegetable matter of the previous step having previously been diluted with alcohol to obtain the alcohol soluble oil component, the addition of the irritant and the scent extract occurring in a centrifugal mixer to produce a rotating suspension of the pesticide, the speed of the rotating suspension ensuring mechanical attachment of the irritant and the scent to the waxy base; and
(v) straining the pesticide under pressure.

## Patentansprüche

1. Ein nichtpenetrierendes Pestizid zur äußeren Anwendung mit nur natürlichen Bestandteilen und ohne Phytotoxizität gegenüber der Wirtsplanze, mit einem Reizmittel in der Form eines Extraktes aus scharfen Pfeffer der Gattung Capsicum, C.frutescens oder C.annum zusammen mit einem Duftpaket aus mindestens einem Duft aus einer Tinktur aus Knoblauch, Zwiebel, Petersilie, Basilikum, Thymian, Koriander, Kreuzkümmel, Senf, Rosmarin, Orange und/oder Zitrone, dadurch gekennzeichnet, daß das von fremden pflanzlichen Stoffen befreite und in einer Menge von 10 bis 33 % des Gesamtgewichtes vorliegende Reizmittel in einer aliphatischen mikrokristallinen Kohlenwasserstoff-Wachsbasis von 9 bis 40 % Gesamtgewicht dispergiert und mit einer ausreichenden Wassermenge getränkt wird, so daß, während das Wasser verdampft, die Basis schrumpft, und daß das Duftpaket in einer Menge von 1 bis 2 % Gesamtgewicht und mit einer in Alkohol löslichen Ölphase und einer wasserlöslichen Komponente der Dispersion zugesetzt wird, wodurch im Gebrauch ein Einwirken eines alkoholischen Teiles der Tinktur die Wanderung des Duftes zu einer Außenfläche des Wachses erleichtert.

2. Das Pestizid nach Anspruch 1, das weiter einen löslichen Dünger enthält.

3. Das Pestizid nach Anspruch 2, wobei der lösliche Dünger Kelp, Vitamine und Mineralien enthält.

4. Das Pestizid nach irgendeinem der Ansprüche 1 bis 3, das weiter ein Germizid enthält.

5. Das Pestizid nach Anspruch 4, wobei das Germizid ein Extrakt aus Eukalyptus ist.

6. Das Pestizid nach irgendeinem der Ansprüche 1 bis 5, wobei es eine wäßrige Suspension ist.

7. Ein Verfahren zum Herstellen des Pestizids nach Anspruch 1 mit den folgenden Stufen:
(i) Suspendieren der mikrokristallinen Wachsbasis in einem sich schnell drehenden Wirbel, der unter Verwendung einer mit Zentrifugalgeschwindigkeit arbeitenden Mischtechnik eine Venturidüse aus Wasser erzeugt,
(ii) Zufügen des durch Kombination von Capsicum der Gattung C.annum oder C.frutescens mit destilliertem Äthylessig und NaCl erzielbaren Wachsbasis, Aufheizen der Kombination während mindestens 24 Stunden und Filtern zum Erzeugen des von fremden Pflanzenstoffen im wesentlichen freien Reizmittels, zur Wachsbasis,
(iii) Zugeben des wasserlöslichen Duftes zur Wachsbasis, wobei der Duft zuvor durch Kombination mit mindestens einem Extraktionsagens extrahiert wurde, Aufwärmen der Kombination während mindestens 24 Stunden und Filtern zum Erzeugen der wasserlöslichen, von fremden Pflanzenstoffen im wesentlichen freien Duftkomponente,
(iv) Zugeben der in Alkohol löslichen Ölphase des Duftes, wobei der fremde pflanzliche Stoff aus der vorhergehenden Stufe zuvor zum Erhalten der in Alkohol löslichen Ölkomponente mit Alkohol verdünnt wurde, Eingeben des Reizmittels und des in einem Zentrifugalmischer auftretenden Duftextraktes zum Erzeugen einer rotierenden Suspension aus dem Pestizid, wobei die Geschwindigkeit der rotierenden Suspension das mechanische Anhaften des Reizmittels und des Duftes an der Wachsbasis sicherstellt, und
(v) Filtern des Pestizides unter Druck.

## Revendications

1. Pesticide non pénétrant appliqué topiquement contenant seulement des ingrédients naturels sans phytotoxicité pour une plante hôte, comprenant un produit irritant sous la forme d'un extrait de piment de capsicums, C. frutescens ou C. annum, en présence d'un ensemble de produits odoriférants comprenant au moins un produit odoriférant d'un extrait d'ail, d'oignon, de persil, de basilic, de thym, de coriandre, de cumin, de moutarde, de romarin, d'orange et/ou de citron, caracérisé en ce qu'on disperse le produit irritant, extrait de la matière végétale en excès et en une quantité de 10 à 33% du poids total, dans une base de cire microcristalline hydrocarbure aliphatique, représentant 9 à 40% du poids total, imprégnée d'une quantité suffisante d'eau, de sorte que lorsque l'eau s'évapore, la base se contracte, et en ce que l'ensemble de produits odoriférants, en une quantité de 1 à 2% du poids total et ayant une phase d'essence soluble dans l'alcool et un composant soluble dans l'eau, est ajouté à la dispersion, où lors de l'utilisation, l'interaction avec la partie alcoolique de la teinture facilite la migration du produit odoriférant à la surface externe de la cire.

2. Pesticide selon la revendication 1, qui comprend en outre un engrais soluble.

3. Pesticide selon la revendication 2, où l'engrais soluble comprend du varech, des vitamines et des minéraux.

4. Pesticide selon l'une quelconque des revendications 1 à 3, qui comprend en outre un germicide.

5. Pesticide selon la revendication 4, où le germicide est un extrait d'eucalyptus.

6. Pesticide selon l'une quelconque des revendications 1 à 5, où le pesticide est une suspension aqueuse.

7. Procédé de préparation du pesticide selon la revendication 1, comprenant les étapes de :
(i) mettre en suspension la base cireuse microcristalline dans un vortex tourbillonnant qui produit un venturi d'eau en utilisant une technique de mélange à grande vitesse centrifuge ;
(ii) ajouter à la base cireuse le produit irritant, obtenu en combinant les capsicums de C. annum ou C. frutescens avec du vinaigre de grain distillé et NaCl, chauffer la combination pendant au moins 24 heures, et soutirer pour donner le produit irritant essentiellement exempt de matière végétale étrangère ;
(iii) ajouter le produit odoriférant soluble dans l'eau à la base cireuse, le produit odoriférant ayant été extrait au préalable en combinant à au moins un agent d'extraction, en chauffant la combinaison pendant au moins 24 heures, et en soutirant pour donner le composant soluble dans l'eau du produit odoriférant essentiellement exempt de matière végétale étrangère ;
(iv) ajouter la phase d'essence soluble dans l'alcool, la matière végétale étrangère de l'étape précédente ayant été diluée au préalable avec de l'alcool pour donner le composant d'essence soluble dans l'alcool, l'addition du produit irritant et de l'extrait de produit odoriférant se faisant dans un mélangeur centrifuge pour produire une suspension rotative du pesticide, la vitesse de la suspension rotative garantissant la fixation mécanique du produit irritant et du produit odoriférant sur la base cireuse ; et
(v) soutirer le pesticide sous pression.
